# EUROPEAN PATENT SPECIFICATION

(11) **EP 1 600 520 B1**
(45) Date of publication and mention of the grant of the patent: **12.10.2011**
(21) Application number: 05445031.7
(22) Date of filing: 17.05.2005
(51) Int. Cl.: C22C 38/28

(54) **Heat-resistant steel**
Hitzebeständiger Stahl
Acier résistant aux températures élevées

(30) Priority: 19.05.2004 SE 0401292
(43) Date of publication of application: 30.11.2005
(73) Proprietor: Sandvik Intellectual Property AB, 811 81 Sandviken (SE)
(72) Inventor: Schuisky, Mikael, 811 34 Sandviken (SE); Rosberg, Andreas, 811 60 Sandviken (SE); Göransson, Kenneth S., 802 52 Gàvle (SE)
(74) Representative: Taquist, Henrik Lennart Emanuel

(56) References cited:
- EP-A- 1 298 228
- WO-A-2004/015156
- PATENT ABSTRACTS OF JAPAN vol. 1998, no. 09, 31 July 1998 (1998-07-31) -& JP 10 088285 A (NIPPON YAKIN KOGYO CO LTD), 7 April 1998 (1998-04-07)
- PATENT ABSTRACTS OF JAPAN vol. 1999, no. 01, 29 January 1999 (1999-01-29) -& JP 10 280103 A (HITACHI METALS LTD), 20 October 1998 (1998-10-20)
- PATENT ABSTRACTS OF JAPAN vol. 016, no. 358 (C-0970), 4 August 1992 (1992-08-04) -& JP 04 110448 A (SUMITOMO METAL IND LTD), 10 April 1992 (1992-04-10)

## Description

### FIELD OF THE DISCLOSURE

The present disclosure relates generally to a steel product, which at high temperatures forms an oxide scale with good surface conductivity and an excellent adhesion to the underlying steel. In particular, it relates to a ferritic chromium steel suitable for the use as interconnects or bipolar plates in solid oxide fuel cells or other high temperature applications such as catalytic converters in cars and trucks.

### BACKGROUND

Ferritic chromium steels are used for applications with high requirements on heat resistance, such as for example interconnect materials in Solid Oxide Fuel Cells (SOFC) or if alloyed with Al, as a material for catalytic converters. They are very suitable materials for use in SOFC applications since the Thermal Expansion Coefficients (TEC) of ferritic steels are close to the TECs of the electro-active ceramic materials used in the SOFC stack, such as yttrium-stabilized zirconia (YSZ) which is the common material used as electrolyte in the fuel cell. This has, for instance, been studied by Linderoth et al. in "Investigation of Fe-Cr ferritic steels as SOFC interconnect material", Mat. Res. Soc. Symp. Proc., Vol. 575, (1999), pp. 325-330.

It is desired that the oxide scale formed on the steel interconnect material does not spall off or crack due to thermal cycling, i.e., the oxide scale should have good adhesion. The formed oxide scale should also have good electrical conductivity and not grow too thick during the life time of the fuel cell, since thicker oxide scales will lead to an increased electrical resistance. The formed oxide should also be chemically resistant to the gases used as fuels in an SOFC, i.e., no volatile metal-containing species such as chromium oxyhydroxides should be formed. Volatile species such as chromium oxyhydroxide will contaminate the electro-active ceramic materials in a SOFC stack, which will lead to a decrease in the efficiency of the fuel cell.

One disadvantage with the use of commercial ferritic chromium steel is that they are usually alloyed with aluminum and/or silicon, which form Al₂O₃ and/or SiO₂ at the working temperature of the SOFC. Both these oxides are good electrical insulating oxides, which will increase the electrical resistance of the cell and lower the fuel cell efficiency.

This has led to the development of ferritic steels with low Al and Si contents, to ensure good conductivity of the formed oxide scales. These newly developed steels are usually also alloyed with manganese. The addition of Mn in the steel will induce the formation of chromium oxide based spinell structures in the formed oxide scale. However, Mn in general has a poor effect on the corrosion resistance of the steel; it is therefore desired that the Mn content in the steel be monitored carefully at low levels. Too high a concentration of Mn in the steel will lead to the growth of thick oxide scales due to severe high temperature corrosion.

In addition to Mn, several of these new developed steels are alloyed with group III elements, i.e., Sc, La and Y and/or other rare earth elements (REM). The addition of La, Y or REM is made to increase the lifetime of the

material at high temperatures. Strong oxide formers such as La, Y and REM are said to decreases the oxygen ion mobility in the formed Cr₂O₃ scale, which will lead to a decrease in the growth rate of the oxide scale. The amount of added REM to the steel has to be carefully monitored, since too high a concentration of REM will lead to production process difficulties, as well as undesired corrosion properties of the steel.

In patent application US 2003/0059335, the steel is alloyed with a small amount of La (0.01 - 0.4% by weight) and optionally also with small amounts of Y and Ce (0.1 to 0.4% by weight).

In patent application EP 1 298 228 A2, the steel is also alloyed with either Y ( ≤ 0.5% by weight) or REM (≤ 0.2% by weight) or La (0.005 - 0.1 % by weight).

In US 6,294,131 B1, the steel is also alloyed with REM (0.005 to 0.5 % by weight) and in patent application US 2002/0192468 A1 the final steel is alloyed with 0.01 - 1.5% yttrium, rare earth metals, and oxides thereof .

JP 10280 discloses a ferritic steel comprising up to 0.5% Y and up to 0.2% of other REM, and WO 2004/015156 discloses a similar composition comprising 1,0% REM in total. An alternative approach is taken in JP3242007 through the addition of 0.5 to 3% Mo and up to 0.5% Cu to a ferritic stainless steel comprising C ≤ 0.025%, N ≤ 0.03%;Si ≤ 0.10%;Mn ≤ 0.50%; Cr 16.0 to 25.0%; Ni ≤ 0.60%; P ≤ 0.030%; S ≤ 0.010%;and one or more of Nb, Ti and Zr to a totalt amount of 1.00%.

In addition to these above-mentioned patents, there are some commercially available ferritic steel for interconnects in SOFC. Two of these are the steel sorts A and B (see further details of A and B in Example 3 below), A being alloyed with 0.04% La, and B with a La content of max 0.2% by weight. All the above mentioned patents and commercially available steels are alloyed with small amounts of rare earth metals such as Y, La and Ce. The addition of reactive rare earth metals will lead to a decrease in corrosion resistance compared with the steel alloy of this invention.

### SUMMARY

It is an object of the present invention to provide a steel alloy with excellent high temperature corrosion resistance. Another object of the present invention is that the oxide scale on said steel alloy has a good adherence and a low surface resistivity. A further object of the present invention is that the above mentioned properties are so good that said alloy does not need alloying with any REM or group III metals, which in turn will lead to a simpler and more cost-effective steel production process. Yet another object of the present invention is to provide a steel alloy for the manufacturing of interconnects and/or bi-polar plates to Solid Oxide Fuel Cells. A further object of the present invention is to provide a steel alloy for the manufacturing of catalytic converters in automobile applications.

The above objects and further advantages are achieved by carefully monitoring the contents of different alloying elements of the steel alloy, in accordance with claim 1. This is done by alloying the steel with 20 to 25% by weight of chromium and monitoring the content of oxide formers such as silicon, aluminum and manganese at low levels. In addition to this, elements, such as Ni, Mo and group IV (titanium group) and group V elements (vanadium group) of the periodic table of elements, are added to the alloy. The stainless steel according to the invention, consists of (by weight): 0.001 < C≤ 0.2%; 0.001 < N≤ 0.1%; 0.001 < 0 ≤ 0.1%; 0.01 < Si ≤ 0.4%; 0.001 < Al < 0.5%; 0.01 < Mn ≤ 0.5%; Cr 20 to 25%; 0.01 ≤ Ni ≤ 5 2.0%; 0.001 ≤ Zr + Hf ≤ 0.1 %; 0.01 ≤ Tri ≤ 0.5%; 0.1 Mo + W ≤ 2.05%; 0.01 ≤ Nb + Ta ≤ 1.25%; 0.01 ≤ V ≤ 0.5%; and balance of Fe and naturally occurring impurities and not more than 0.010% of S impurity. Said alloy is produced in a conventional steel production process. The final product of said alloy can have the form of a strip, foil, wire, tube, bar or even as a powder, preferably as strip or a foil.

One factor is that said alloy is heat resistant at temperatures up to 900°C and that the oxide scale formed does not grow too thick. Therefore, the mass gain per unit area of said alloy is less than 1.5 mg/cm², when the steel alloy has been oxidized in air or in air + 1 % H₂O mixture for 1000 hours at 850°C or any environment similar to the gases used in a Solid Oxide Fuel Cell. A further aspect is that the grown oxide scale does not spall off, i.e., has a good adhesion to the underlying alloy.

To be able to use the steel alloy as interconnect or bipolar plate in SOFC, the thermal expansion of said alloy should not deviate considerably from the thermal expansions of the anode material or the electrolyte material used in the fuel cell. Therefore, said alloy has a thermal expansion coefficient of 10 to 15.10⁻⁶°C⁻¹ in the temperature range 0 to 900°C, or even more preferably 11 to 14.10⁻⁶°C⁻¹, and most preferably 11.5 to 13·10⁻⁶ °C⁻¹. As a consequence thereof, the thermal expansion mismatch (TEM) between the electro-active ceramic materials in the fuel cell and the thermal expansion of said alloy is not greater than ± 25%, or preferably less than ± 20%, or most preferred lower than ± 15%. Here the thermal expansion mismatch (TEM) is defined as (TECₛₛ - TEC_{ce})/TECₛₛ, where the TECₛₛ is the thermal expansion of the steel alloy and TEC_{ce} is the thermal expansion of the electro-active ceramic materials used in anode-supported fuel cells.

Yet another important object is that said alloy has a good conductivity. The bipolar plate works as a current collector in a fuel cell. To avoid degradation of the fuel cell efficiency, the contact resistance of the steel alloy is kept as low as possible throughout the lifetime of the fuel cell. The area specific resistance (ASR) of said alloy in a SOFC setup should be kept low but also the increment of ASR with time is kept as low as possible. If the increment of the ASR is large, this can lead to a decrease of the fuel cell efficiency.

### BRIEF DESCRIPTION OF THE FIGURES

Figure 1 shows the weight gain per unit area plotted vs. time of an exemplary embodiment of a disclosed steel alloy, together with the four steel alloys (Sandvik ID numbers 433, 434, 436 and 437) produced for comparison, oxidized in air for 336, 672 and 1008 hours, respectively.
Figure 2 shows a SEM cross-section micrograph of the oxide scale formed on an exemplary embodiment of a disclosed steel alloy oxidized in air for 336 hours at 850°C.
Figure 3 shows a Glow Discharge Optical Emission Spectroscopy (GDOES) depth profile of the oxide scale formed on an exemplary embodiment of a disclosed steel alloy oxidized in air for 336 hours at 850°C.
Figure 4 shows the weight gain per unit area for eight different steel grades including an exemplary embodiment of a disclosed steel alloy and the four steel alloys (Sandvik ID numbers 433, 434, 436 and 437) produced for comparison after oxidization in air +1% H₂O at 850°C after 500 hours.

### DETAILED DESCRIPTION

Chemical Composition: The chemical composition of the steel alloy consists essentially of (by weight-%):
C ≤ 0.2% but more than zero, preferably 0.001 < C ≤ 0.2%
N ≤ 0.1 % but more than zero, preferably 0.001 < N ≤ 0.1 %
O ≤ 0.1% but more than zero, preferably 0.001 < O ≤ 0.1 %
Si ≤ 0.4% but more than zero, preferably 0.01 < Si ≤ 0.4%
Al < 0.5% but more than zero, preferably 0.001 < Al < 0.5%
Mn ≤ 0.5% but more than zero, preferably 0.01 < Mn ≤ 0.5%
Cr 20 to 25%
Ni ≤ 2.0% but more than zero, preferably 0.01 ≤ Ni ≤ 2.0%
Zr + Hf ≤ 0.1% but more than zero, preferably 0.001 ≤ Zr + Hf ≤ 0.1%
Ti ≤ 0.5% but more than zero, preferably 0.01 ≤ Ti ≤ 0.5%
Mo + W ≤ 2.5% but more than zero, preferably 0.01 ≤ Mo +W ≤ 2.5% or even more preferably 0.1 ≤ Mo +W ≤ 5 2.0%
Nb + Ta ≤ 1.25% but more than zero, preferably 0.01 ≤ Nb + Ta ≤ 1.25%
V ≤ 0.5% but more than zero, preferably 0.01 ≤ V ≤ 0.5%
and balance of Fe and naturally occurring impurities, but not more than 0.010% of S impurity. Said alloy is produced in an ordinary steel production process.

In one exemplary embodiment of the disclosed steel alloy, the chemical composition comprises the following elements (by weight-%):
C ≤ 0.1% but more than zero, preferably 0.001 < C ≤ 0.1%
N ≤ 0.1 % but more than zero, preferably 0.001 < N ≤ 0.1%
O ≤ 0.1 % but more than zero, preferably 0.001 < O ≤ 0.1%
Si ≤ 0.4% but more than zero, preferably 0.01 < Si ≤ 0.4%
Al < 0.4% but more than zero, preferably 0.001 < Al < 0.4%
Mn ≤ 0.4% but more than zero, preferably 0.01 < Mn ≤ 0.4%
Cr 20 to 25%
Ni ≤ 1.0 % but more than zero, preferably 0.01 ≤ Ni ≤ 1.0%
Zr ≤ 0.1 % but more than zero, preferably 0.001 ≤ Zr ≤ 0.1%
Ti ≤ 0.5% but more than zero, preferably 0.01 ≤ Ti ≤ 0.4%
Mo ≤ 2.5% but more than zero, preferably 0.01 ≤ Mo ≤ 2.5% or even more preferably 0.1 ≤ Mo ≤ 2.0%
Nb ≤ 1.25% but more than zero, preferably 0.01 ≤ Nb ≤ 1.25%
Vi ≤ 0.1 % but more than zero, preferably 0.01 ≤ V ≤ 0.1%
and balance of Fe and naturally occurring impurities, but not more than 0.010 % of S impurity. Said alloy is produced in an ordinary steel production process.

High Temperature Corrosion Resistance: The disclosed alloy is heat resistant at temperatures up to 900°C and the oxide scale formed upon oxidization does not grow too thick. In Table 1, the theoretical mass gain per area unit for a chromium oxide scale with different thicknesses is calculated. The calculations assume that a dense and pure Cr₂O₃ scale is formed on the surface of the steel. The Cr₂O₃ has a density of 5300 mg/cm³ and the mass percent of oxygen in the Cr₂O₃ is 31.6%. This will give a mass gain per unit area of 0.16 mg/cm² for a 1 µm thick pure and dense chromium oxide scale, and 0.82 mg/cm² for 5 µm thick oxide scale.

Noted here should be that these values of mass gain of the formation of pure Cr₂O₃ are theoretical. When a ferritic chromium steel alloy is oxidized, usually mixed oxides are formed and the weight gain depends on the added alloying elements. However, a low weight gain is important since higher weight gains will lead to thicker oxide scale formations, which in turn will increase the resistance of the steel. The disclosed steel alloy therefore has a weight gain of less than 1.5 mg/cm² after 1000 hours of exposure to air and/or air + 1 % H₂O at 850°C.

A further feature is that the grown oxide scale does not spall off, i.e., has a good adhesion to the underlying alloy.

Thermal Expansion: To be able to use steel as interconnects or bipolar plates in SOFC, the thermal expansion of the alloy should not deviate greatly from the thermal expansion of the anode material or the electrolyte material used in the fuel cell. Therefore, the steel alloy has a thermal expansion coefficient of 10 to 15·10⁻⁶ °C⁻¹ in the temperature range 0 to 900°C, or even more preferably 11 to 14·10⁻⁶ °C⁻¹ and most preferably 11.5 to 13·10⁻⁶ °C⁻¹. Further, the thermal expansion mismatch (TEM) between the electro-active ceramic materials in the fuel cell and the thermal expansion of said alloy is not greater than ± 25%, preferably less than ± 20%, and most preferably lower than ± 15%.

Here the thermal expansion mismatch (TEM) is defined as (TECₛₛ-TEC_{ce})/TECₛₛ, where the TECₛₛ is the thermal expansion of the alloy and TEC_{ce} is the thermal expansion of the electro-active ceramic materials. The thermal expansion of said steel alloy can be tuned to match the thermal expansion of the electro-active ceramic materials in the fuel cell by carefully monitoring the amount of alloying elements, such as nickel, in the steel alloy.

Conductivity: The disclosed steel alloy has a good conductivity and, in a SOFC setup, have an ASR of less than 50 mΩ cm² after 1000 hours, preferably an ASR even lower that 25 mΩ cm² after 1000 hours, on both anode and cathode side of the interconnect. Moreover, the increment of the ASR is not greater than 10 mΩ cm² per 1000 hours, preferably even lower than 5 mΩ cm² per 1000 hours on both the anode and the cathode side of the interconnect. This factor promotes a good efficiency of the fuel cell throughout the life time of the fuel cell, which might be as long as 40 000 hours.

A preferred embodiment of the disclosed steel alloy will now be described in more detail. First, the steel alloy is produced by ordinary metallurgical steel making routines to the chemical composition as described, for example, in the following Examples. Then said steel alloy is hot-rolled down to an intermediate size, and thereafter cold-rolled in several steps with a number of recrystallization steps, until a final specific thickness of normally less than 3 mm, and a width of maximally 400 mm. The linear thermal expansion of said steel alloy was determined by dilatometer measurement and was found to be 12.3 10⁻⁶ °C⁻¹ for the temperature range 30 to 900°C.

Example 1: A 0.2 mm thick steel alloy strip with a nominal composition (by weight) of max 0.2 % C, max 0.1 % N, max 0.1 % O, max 0.4 % Si, max 0.5 % Al, max 0.5 % Mn, 20 to 25 % Cr, max 2.0 % Ni, 0,001 to 0.1 % Zr + Hf, max 0.5 % Ti, max 2.5 % Mo +W, max 0.5 % V, max 1.25 % Nb +Ta and balance of Fe (with naturally occurring impurities) was produced by an ordinary steel making process, followed by hot-rolling down to a thickness of less than 4 mm. Thereafter, it was cold-rolled in several steps with a number of recrystallization steps down to a final thickness of 0.2 mm. Strips of four other steel alloys were produced in the same way for comparison with the steel alloy of Example 1. The compositions of these additional steel alloys and their Sandvik identity numbers are given in Table 2.

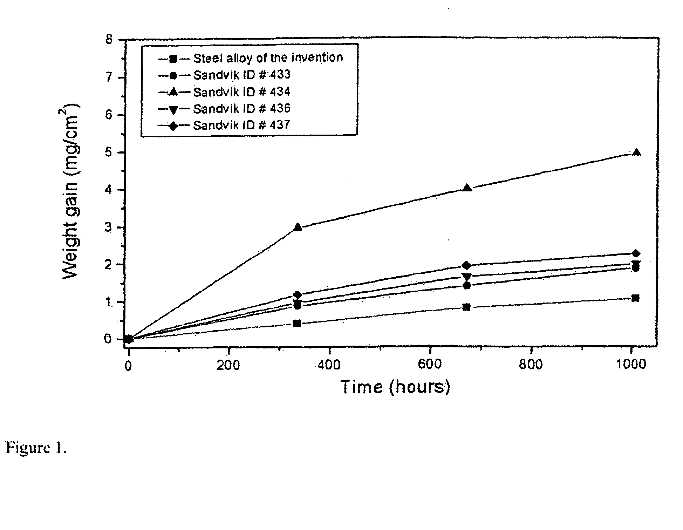

Coupons of the five steel alloy strips with the size 70 x 30 x 0.2 mm were oxidized in air at 850°C for 336, 672 and 1008 hours, respectively. In Figure 1, the mass gain per unit area is plotted as a function of time for the five steel alloys. According to Figure 1, a mass gain of less than 1.1 mg/cm² per 1000 hours is obtained for the steel alloy of Example 1, insuring a good high temperature corrosion resistance and a lower growth rate of the formed oxide scale. However, for the steel alloys made for comparison (Sandvik ID numbers 433, 436 and 437) with a Mn content of 0.5% (by weight) and the addition of rare earth metals in the form of Ce, all showed a mass gain of more than 1.8 mg/cm² per 1000 hours, and the steel alloy with a Mn content of 5% (by weight) had a mass gain of almost 5 mg/cm² per 1000 hours. The extreme large weight gain for steel alloy with 5% Mn (Sandvik ID number 434) shows the importance of good monitoring of the Mn content in the alloy to avoid high temperature corrosion. A conclusion to be drawn from this is that the Mn content in the steel alloy should be carefully monitored and low amounts of Mn as alloying element is preferred if good high temperature corrosion resistance is to be obtained.

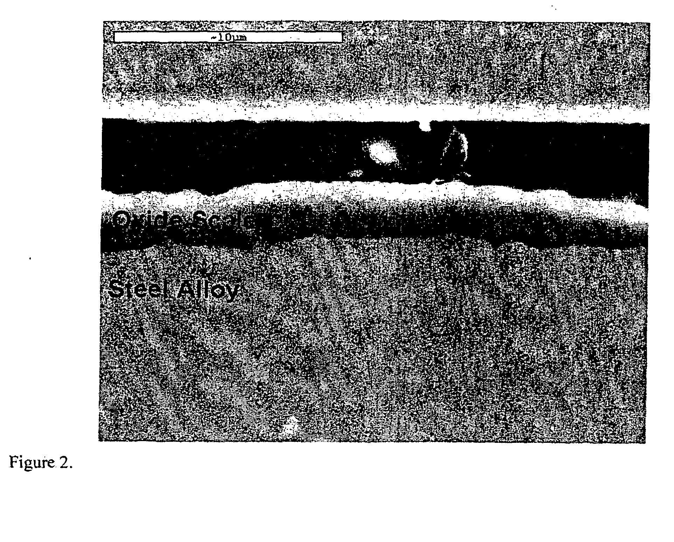

In Figure 2, a cross sectional Scanning Electron Microscopy (SEM) micrograph of the formed oxide scale after 336 hours at 850°C in air on the steel alloy of Example 1 is shown. In Figure 2, it can be seen that the formed oxide scale is also well adherent to the underlying steel alloy and that the oxide scale thickness is less than 3 µm.

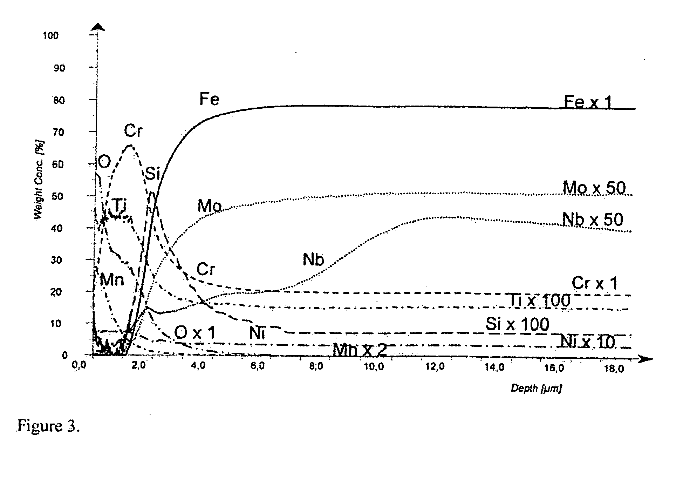

The chemical composition of the formed oxide scale after oxidization in air for 336 hours at 850°C was determined by Glow Discharge Optical Emission Spectroscopy (GDOES). In Figure 3, the GDOES depth profile for the formed oxide scale is shown. The different scales for different elements should be noted. In Figure 3, it can be seen that the manganese content in the formed oxide scale increases at the surface to about 12% by weight. The thickness of this manganese-rich oxide scale is about 0.5 µm, followed by a more chromium-rich oxide scale of approximately less than 2.4 µm. The formation of a manganese-rich oxide scale at an outermost layer at the surface is of importance since ternary chromium oxides such as MnCr₂O₃ are believed to lower the formation of volatile chromium species such as chromium oxyhyroxides. It can also be seen that the titanium content is approximately 0.4% by weight in the oxide scale. Finally, it can be noted that at the interface of the steel alloy and the oxide scale, a region of silicon oxide is obtained. The formation of silicon oxide should be kept as low as possible but is unavoidable if the steel is alloyed or has small residuals of silicon in the matrix. However, as long as the formation of insulating silicon oxide at the steel interface is only as small islands of particles, and not as a continuous layer, it is acceptable for the performance of the fuel cell. X-ray diffraction of the oxidized coupon showed that the oxides formed in the scale had both spinell (MCr₂O₃) and corundum (M₂O₃) types of structures.

Example 2: As an additional example of an exemplary embodiment of the disclosed steel alloy, coupons of the final steel alloy strip with the sizes of approximately 30 x 40 x 0.057 mm were oxidized in air at both 750°C and 850°C for 500 and 1000 hours, respectively. In Table 3, a summary of oxidization results of the four samples together with the exact coupon sizes of the initial samples is given. The result at 750°C showed a very low mass gain per unit area, lower than 0.2 mg/cm² after 500 hours of oxidization and the mass gain did not increase greatly after 1000 hours. Instead, it was still lower than 0.3 mg/cm² after 1000 hours. For the two sample oxidized at 850°C, the mass gain per unit area was larger but still low, less than 1.1 mg/cm², which was also the result for the thicker strip (0.2 mm) samples, oxidized in Example 1.

The low mass gains observed in both Examples 1 and 2 above were compared with published values of mass gain attained on other commercially available steels, and other test melts. In Table 4, values as obtained from the literature on other steel grades together with the values obtained in the present study have been summarized for comparison with an embodiment of the present invention. In Table 4, it can be seen that the weight gain of exemplary embodiments of the disclosed steel alloy is low compared to other commercially available steel grades. For instance, it has been reported that the commercially available steel ZMG232 has a weight gain of approximately 0.5 mg/cm², already after 100 hours exposure of air at 850°C. The same alloy when exposed to air +1% H₂O mixture for only 670 hours at 850°C has an even larger weight gain of 1.54 mg/cm².

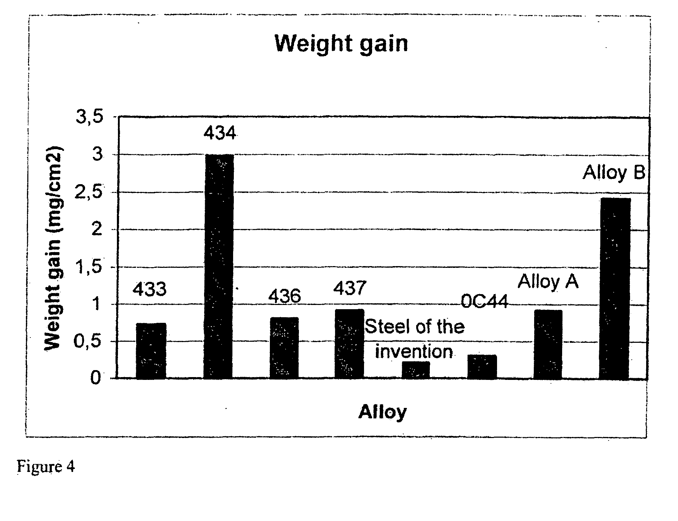

Example 3: As a third example, coupons of exemplary embodiments of the disclosed steel alloy and the four test melts (Sandvik ID numbers 433, 434, 436 and 437) described in Example 1 and the Sandvik 0C44 alloy, were oxidized together with coupons of two commercially available steel grades designed for the use as interconnects in SOFC, alloy A and alloy B at 850°C in air + 1 % H₂O for 500 hours. In Figure 4, the weight gain for the different steel grades after oxidation at 850°C in air + 1% H₂O is shown. In Figure 4, it can be seen that the exemplary embodiments of the disclosed steel alloy have a much lower weight gain compared with the four Sandvik test melts, and also have a much lower weight gain than the two commercially available steel grades. In this context, a low weight gain is equal to a good high temperature corrosion resistance. The second lowest weight gain is obtained by the Sandvik 0C44 alloy with the nominal composition (by weight) of max 0.018% C, max 0.025% N, max 0.5% Si, max 0.35% Mn, 21.1 to 21.8% Cr, max 0.3% Ni, max 0.02% P, max 0.007% S, max 0.15% Mo, max 0.010% Ti, max 0.01 % Nb, max 0.03 % Ce, max 0.015% Mg and balance of Fe (with naturally occurring impurities). As seen in Example 1, the steel alloy Sandvik ID number 434 with a high Mn content has the largest weight gain almost 3 mg/cm² after 500 hours of exposure. The commercial available alloy B with a composition of (by weight) C = 0.02%, Si = 0.40%, Mn = 0.50%, Ni = 0.26%, Cr = 21.97% Al = 0.21 %, Zr = 0.22%, La = 0.04% and balance of Fe according to reference "Development of Ferritic Fe-Cr Alloy for SOFC separator", T. Uehara, T. Ohno & A. Toji, Proceedings Fifth European Solid Oxide Fuel Cell Forum, Lucerne, Switzerland, edited by J. Huijsmans (2002) p. 281, has the second largest weight gain of almost 2.5 mg/cm² after 500 hours of exposure. The three other Sandvik steel alloys ID#433, 436 and 437 with only 0.5% by weight Mn and the commercial available alloy A with a nominal composition of (by weight) Cr 21.0 to 24.0%, C max 0.03%, Mn max 0.8%, Si max 0.5%, Cu max 0.5%, Ti max 0.25, P max 0.05, La max 0.2% and balance of Fe, have weight gains of less than 1 mg/cm², but still much higher than exemplary embodiments of the disclosed steel alloy and the Sandvik 0C44 alloy.

Example 4: All the three previous examples have described the excellent high temperature corrosion resistance of exemplary embodiments of disclosed steel alloy. In this fourth example, the low electrical resistivity of the exemplary steel alloys will be exemplified. The contact resistance was measured in dry air for 2900 hours at 750°C with a temperature peak of 850°C for 10 hours in the beginning. The load of the contact was 1 kg/cm² at the start and the contact area was 0.5 cm². The measured area specific resistance (ASR) was initially, i.e., after the 850°C temperature peak lower than 15 mΩ cm² and had after 2900 hours, including 6 thermal cycles, increased to below 25 mΩ cm². The increment of the ASR with time was lower than 5 mΩ cm² per 1000 hours. If extrapolated linearly, the ASR of the contact would be less than 200 mΩ cm² after 40,000 hours of exposure. It is important for the fuel cell efficiency that the ASR is low throughout the lifetime of the fuel cell. Furthermore, when the contact resistance was tested under anode gas environment, i.e., Ar + 9% H₂ at 750°C, the ASR was even lower, well under 10 mΩ cm² after 600 hours of exposure. The increment of the ASR was very low, under 2 mΩ cm² per 1000 hours. If extrapolated linearly the ASR of the contact on the anode side would be much lower than 200 mΩ cm² after 40,000 hours of exposure, even lower than 100 mΩ cm² after 40,000 hours of exposure. These values can be compared with the contact resistance of approximately 26 mΩ cm² after exposure of air at 750°C for 1000 hours for the commercially available steel ZMG 232 which have been reported in "Development of Ferritic Fe-Cr Alloy for SOFC separator", T. Uehara, T. Ohno & A. Toji, Proceedings Fifth European Solid Oxide Fuel Cell Forum, Lucerne, Switzerland, edited by J. Huijsmans (2002) p. 281.

**Table 1**

| Area (cm²) | Oxide Scale Thickness µm) | Volume (cm³) | Weight of the scale (mg) | Weight gain (mg/cm²) |
|---|---|---|---|---|
| 1 | 1 | 0.0001 | 0.52 | 0.16 |
| 1 | 2 | 0.0002 | 1.04 | 0.33 |
| 1 | 5 | 0.0005 | 2.60 | 0.82 |
| 1 | 10 | 0.0010 | 5.20 | 1.64 |
| 1 | 1.4 | 0.00014 | 0.73 | 0.23 |

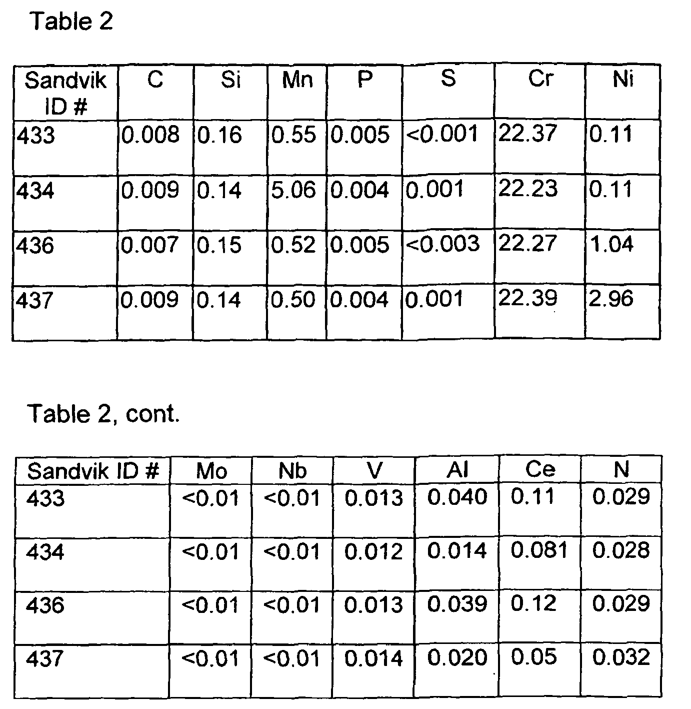

**Table 3**

| Sample | Size | Thickness | Mass | Time | Temp. | Mass after | Gain |
|---|---|---|---|---|---|---|---|
| | mm² | mm | grams | hours | °C | grams | mg/cm² |
| 1 | 29.5x40.0 | 0.058 | 0.5278 | 500 | 750 | 0.5311 | 0.14 |
| 2 | 30.0x40.0 | 0.057 | 0.5256 | 1000 | 750 | 0.5322 | 0.27 |
| 3 | 30.0x39.0 | 0.057 | 0.5096 | 500 | 850 | 0.5290 | 0.83 |
| 4 | 30.0x40.0 | 0.056 | 0.5219 | 1000 | 850 | 0.5466 | 1.03 |

**Table 4**

| Steel/Supplier | Temperature °C | Time (hr) | Atmosphere | Weight gain mg·cm⁻² | Reference |
|---|---|---|---|---|---|
| ZMG 232 - Hitachi | 750 | 100/1000 | Air | 0.18/0.36 | 1 |
| | 850 | 100 | Air | 0.5 | 1 |
| | 1000 | 100 | Air | 2.4 | 1 |
| JS-3 Julich-KTN | 800 | 500/1000 | Air | 0.25/0.32 | 2 |
| JS-1 Julich-KTN | 800 | 500/1000 | Air | 0.78/1.03 | 2 |
| ZMG 232 - Hitachi | 750 | 670 | Air+1%H₂O | 0.27 | 3 |
| | 800 | 670 | Air+1 %H₂O | 0.73 | 3 |
| | 850 | 670 | Air+1 %H₂O | 1.54 | 3 |
| | 900 | 670 | Air+1 %H₂O | 1.95 | 3 |
| JS-3 Julich-KTN | 750 | 670 | Air+1%H₂O | 0.38 | 3 |
| | 800 | 670 | Air+1%H₂O | 0.67 | 3 |
| | 850 | 670 | Air+1%H₂O | 2.0 | 3 |
| | 900 | 670 | Air+1%H₂O | 2.6 | 3 |
| Steel of the invention | 850 | 1008 | Air | 1.05 | Example 1 |
| Sandvik ID# 433 | 850 | 1008 | Air | 1.87 | Example 1 |
| Sandvik ID# 434 | 850 | 1008 | Air | 4.94 | Example 1 |
| Sandvik ID# 436 | 850 | 1008 | Air | 1.98 | Example 1 |
| Sandvik ID# 437 | 850 | 1008 | Air | 2.25 | Example 1 |
| Steel of the invention | 750 | 1000 | Air | 0.27 | Example 2 |
| Steel of the invention | 850 | 1000 | Air | 1.03 | Example 2 |
| Steel of the invention | 850 | 500 | Air+1 %H2O | 0.22 | Example 3 |
| Sandvik ID# 433 | 850 | 500 | Air+1%H2O | 0.72 | Example 3 |
| Sandvik ID# 434 | 850 | 500 | Air+1%H2O | 3.0 | Example 3 |
| Sandvik ID# 436 | 850 | 500 | Air+1%H2O | 0.80 | Example 3 |
| Sandvik ID# 437 | 850 | 500 | Air+1%H2O | 0.92 | Example 3 |
| Alloy A | 850 | 500 | Air+1 %H2O | 0.90 | Example 3 |
| Sandvik OC44 | 850 | 500 | Air+1 %H2O | 0.3 | Example 3 |
| Alloy B | 850 | 500 | Air+1%H2O | 2.4 | Example 3 |

| | | | | | |
|---|---|---|---|---|---|
| Notes to Table 4: 1. "Long term oxidation behaviour and compatibility with contact materials of newly developed ferritic interconnect steel", J. Pirón-Abellán, F. Tietz, V. Shemet, A. Gil, T. Ladwein, L. Singheiser & W.J Quadakkers, Proceedings Fifth European Solid Oxide Fuel Cell Forum, Lucerne, Switzerland, edited by J. Huijsmans (2002) p. 248. 2. "Development of Ferritic Fe-Cr Alloy for SOFC separator", T. Uehara, T. Ohno & A. Toji, Proceedings Fifth European Solid Oxide Fuel Cell Forum, Lucerne, Switzerland, edited by J. Huijsmans (2002) p. 281. 3. "Corroslon Behaviour of Chromium Steels for Interconnects in Solid Oxide Fuel cells" T. Flch Pedersen, P. B. Friehlin, J. B. Bilde-Sdrensen, S. Linderoth, presented at the conference "Corrosion Science in the 21st Century" held at UMIST in July 2003. | | | | | |

## Claims

1. A high temperature corrosion resistant stainless steel, consisting of (by weight):
0.001 < C ≤ 0.2%;
0.001 < N ≤ 0.1%;
0.001 < O ≤ 0.1%;
0,01 < Si ≤ 0.4%;
0.001 < Al < 0.5%;
0.01 < Mn ≤ 0.5%;
Cr 20 to 25%;
0.01 ≤ Ni ≤ 2.0%;
0.001 ≤ Zr + Hf ≤ 0.1%;
0.01 ≤ Ti ≤ 0.5%;
0.1 ≤ Mo + W ≤ 2.5%;
0.01 ≤ Nb + Ta ≤ 1.25%;
0.01 ≤ V ≤ 0.5%; and
balance of Fe and naturally occurring impurities and not more than 0.010% of S impurity.

2. The stainless steel according to claim 1, consisting of (by weight):
0.001 < C ≤ 0.1%;
0.001 <N ≤ 0.1%;
0.001 < O ≤ 0.1%;
0.01 < Si ≤ 0.4%;
0.001 < Al < 0.4%;
0.01 < Mn ≤ 0.4%;
Cr 20 to 25%;
0.01 ≤ Ni ≤ 1.0%;
0.001 ≤ Zr ≤ 0.1%;
0.01 ≤ Ti ≤ 0.4%
0.01 ≤ Mo ≤ 2.5%;
0.01 ≤ Nb ≤ 1.25%;
0.01 ≤ V ≤ 0.1%; and
balance of Fe and naturally occurring impurities and not more than 0.010% of S impurity.

3. The stainless steel according to claim 1 or 2, wherein the stainless steel has a weight gain of less than 1.5 mg/cm² when oxidized in air or air + 1% H₂O at 850°C after 1000 hours, without any spallation of the oxide scale.

4. The stainless steel according to any of the previous claims, wherein the stainless steel has a linear thermal expansion coefficient of more than 11.5·10⁻⁶ (°C⁻¹) but less than 13.0·10⁻⁶ (°C⁻¹) in the temperature range of 30 to 900°C.

5. The alloy according to any of the previous claims, wherein the stainless steel has a thermal expansion mismatch (TEM) with an electro-active ceramic material in a solid oxide fuel cell of less than ± 15 %.

6. The alloy according to any of the preceding claims, wherein the stainless steel has an Area Specific Resistance of less than 50 mΩ cm² after 1000 hours on both an anode side and a cathode side of a Solid Oxide Fuel Cell.

7. The alloy according to claim 6, wherein an increment of the Area Specific Resistance is not greater than 10 mΩ cm² per 1000 hours.

8. A solid oxide fuel cell comprising the stainless steel according to claim 1 or 2.

9. A catalytic converter intended for the automobile industry, comprising the stainless steel according to claim 1 or 2.

## Patentansprüche

1. Korsionsbeständiger, rostfreier Stahl für hohe Temperaturen, der (ausgedrückt in Gew.-%) aus folgendem besteht:
0,001 < C ≤ 0,2%;
0,001 < N ≤ 0,1%;
0,001 < O ≤ 0,1%;
0,01 < Si ≤ 0,4%;
0,001 < Al < 0,5%;
0,01 < Mn ≤ 0,5%;
Cr 20 to 25%;
0,01 ≤ Ni ≤ 2,0%
0,001 ≤ Zr+Hf ≤ 0,1 %;
0,01 ≤ Ti ≤ 0,5%;
0,1 ≤ Mo + W ≤ 2,5%;
0,01 ≤ Nb + Ta ≤ 1,25%;
0,01 ≤ V ≤ 0,5%; und
im Übrigen aus Eisen und natürlicherweise auftretenden Verunreinigungen und nicht mehr als 0,010% an S (Schwefel) Verunreinigungen.

2. Rostfreier Stahl nach Anspruch 1, der (nach Gew.-%) aus folgendem besteht:
0,001 < C ≤ 0,1%;
0,001 < N ≤ 0,1 %;
0,001 < O ≤ 0,1%;
0,01 < Si ≤ 0,4%;
0,001 < Al < 0,4%;
0,01 < Mn ≤ 0,4%;
Cr 20 to 25%;
0,01 ≤ Ni ≤ 1,0%;
0,001 ≤ Zr ≤0,1%;
0,01 ≤ Ti ≤ 0,4%;
0,01 ≤ Mo ≤ 2,5%;
0,01 ≤ Nb ≤ 1,25%;
0,01 ≤ V ≤ 0,1%; und
im Übrigen aus Eisen und natürlicherweise auftretenden Verunreinigungen und nicht mehr als 0,010% S Verunreinigung.

3. Rostfreier Stahl nach Anspruch 1 oder 2, wobei der rostfreie Stahl eine Gewichtszunahme von weniger als 1,5 mg/cm² hat, wenn er in Luft oder in Luft +1% H₂O bei 850 °C über 1000 Stunden oxidiert wurde, ohne Abspaltung der Verzunderung.

4. Rostfreier Stahl nach einem der vorstehenden Ansprüche, wobei der rostfreie Stahl einen linearen thermischen Expansionskoeffizienten von mehr als 11,5·10⁻⁶ (°C⁻¹), jedoch weniger als 13,0 · 10⁻⁶ (°C⁻¹) in dem Temperaturbereich von 30 bis 900°C hat.

5. Legierung nach einem der vorstehenden Ansprüche, wobei der rostfreie Stahl eine Fehlanpassung hinsichtlich der thermischen Expansion (TEM) bezüglich eines elektroaktiven keramischen Materials in einer massiven Oxidbrennstoffzelle von weniger als ± 15% hat.

6. Legierung nach einem der vorstehenden Ansprüche, wobei der rostfreie Stahl einen flächenspezifischen Widerstand von weniger als 50 mΩ cm² nach 1000 Stunden Benutzung sowohl auf der Anodenseite als auch auf der Kathodenseite einer massiven Oxidbrennstoffzelle hat.

7. Legierung nach Anspruch 6, wobei ein Anstieg des spezifischen Flächenwiderstandes nicht mehr als 10 mΩ cm² auf 1000 Stunden beträgt.

8. Massive Oxidbrennstoffzelle, welche den rostfreien Stahl nach Anspruch 1 oder 2 aufweist.

9. Katalytischer Konverter (Katalysator), der für die Automobilindustrie vorgesehen ist, welcher den rostfreien Stahl nach Anspruch 1 oder 2 aufweist.

## Revendications

1. Un acier inoxydable résistant à la corrosion à température élevée contenant (en poids):
0,001 < C ≤ 0,2%;
0,001 < N ≤ 0,1%;
0,001 < O ≤ 0,1%;
0,01 < Si ≤ 0,4%;
0,001 < Al < 0,5%;
0,01 < Mn ≤ 0,5%;
20 ≤ Cr ≤ 25%;
0,01 ≤ Ni ≤ 2,0%; 0,001 1 ≤ Zr + Hf ≤ 0,1 %;
0,01 ≤ Ti ≤ 0,5%;
0,1 ≤ Mo +W ≤ 2,5%;
0,01 ≤ Nb + Ta ≤ 1,25%;
0,01 ≤ V ≤ 0,5%;
le reste consistant en Fe et en impuretés naturellement présentes, et pas plus de 0.010% d'impuretés consistant en S étant présentes.

2. L'acier inoxydable selon la revendication 1, contenant (en poids):
0,001 < C ≤ 0,1 %;
0,001 < N ≤ 0,1 %;
0,001 < O ≤ 0,1%;
0,01 <Si ≤ 0,4%;
0,001 < Al < 0,4%;
0,01 < Mn ≤ 0,4%;
20 ≤ Cr ≤ 25%;
0,01 ≤ Ni ≤ 1,0%;
0,00 1 ≤ Zr ≤ 0,1%;
0,01 ≤ Ti ≤ 0,4%;
0,01 ≤ Mo ≤ 2,5%;
0,01 1 ≤ Nb ≤ 1,25%;
0,01 ≤ V ≤ 0,1%;
le reste consistant en Fe et en impuretés naturellement présentes et pas plus de 0.010% d'impuretés consistant en S étant présentes.

3. L'acier inoxydable selon la revendication 1 ou 2, dans lequel l'acier inoxydable donne lieu à une augmentation de poids inférieure à 1,5 mg/cm² après oxydation dans l'air ou dans de l'air additionné de 1 % de H₂O à 850°C après 1000 heures, sans que ne se produise une spallation de pailles d'oxyde.

4. L'acier inoxydable selon une quelconque des revendications précédentes, dans lequel l'acier inoxydable présente un coefficient d'expansion thermique linéaire supérieur à 11,5x10⁻⁸ (C⁻¹) et inférieur à 13,0x10⁻⁶ (C⁻¹) dans le domaine de température range de 30 à 900°C.

5. L'alliage selon une quelconque des revendications précédentes, dans lequel l'acier inoxydable présente un décalage d'expansion thermique (TEM) avec un matériau céramique électro actif dans une pile à combustible à oxyde solide inférieur à ± 15%.

6. L'alliage selon une quelconque des revendications précédentes, dans lequel l'acier inoxydable présente une résistivité AREA (American Railway Engineering Association) inférieure à 50 mΩ cm² après1000 heures tant du côté anode que du côté cathode d'une pile à combustible à oxyde solide.

7. L'alliage selon la revendication 6, dans lequel un incrément de la résistivité AREA n'est pas supérieu à 10 mΩ cm² par 1000 heures.

8. Une pile à combustible à oxyde solide comprenant l'acier inoxydable selon la revendication 1 ou 2.

9. Un convertisseur catalytique destiné à l'industrie automobile, comprenant l'acier inoxydable selon la revendication 1 ou 2.
